# EUROPÄISCHE PATENTSCHRIFT

(11) **EP 1 295 849 B1**
(45) Veröffentlichungstag und Bekanntmachung des Hinweises auf die Patenterteilung: **12.07.2006**
(21) Anmeldenummer: 02018250.7
(22) Anmeldetag: 22.08.2002
(51) Int. Cl.: C01B 17/76, F23J 7/00

(54) **Verfahren zur Niedertemperatur-Verbrennung von Schwefel zur Herstellung von Oleum und Schwefelsäure**
Low-temperature sulfur combustion process for the manufacture of oleum and sulfuric acid
Procédé de préparation d'oléum et de l'acide sulfurique par combustion de soufre à temperature faible

(30) Priorität: 04.09.2001 DE 10143176
(43) Veröffentlichungstag der Anmeldung: 26.03.2003
(73) Patentinhaber: LANXESS Deutschland GmbH, 51369 Leverkusen (DE)
(72) Erfinder: Eichenhofer, Kurt-Wilhelm, 51375 Leverkusen (DE); Grabowski, Klaus-Peter, 42929 Wermelskirchen (DE); Dräger, Günter, 51381 Leverkusen (DE); Kürten, Martin, 51465 Bergisch Gladbach (DE); Schweitzer, Martin, 51381 Leverkusen (DE)

(56) Entgegenhaltungen:
- GB-A- 939 805
- US-A- 3 936 275
- US-A- 5 389 354
- US-A- 5 807 530
- "ULLMANNS ENCYKLOPAEDIE DER TECHNISCHEN CHEMIE" ULLMANNS ENCYKLOPAEDIE DER TECHNISCHEN CHEMIE, VERLAG, CHEMIE, WEINHEIM, DE, Bd. 21, 1982, Seiten 35-40, XP002255919

## Beschreibung

Die Erfindung betrifft ein Verfahren zur Herstellung von Oleum mit einer Konzentration von 10 bis 45 Gew.-% SO₃ und Schwefelsäure mit einer Konzentration von 94 bis 100 Gew.-% durch gemeinsame Verbrennung von Schwefel mit Luftsauerstoff und gegebenenfalls SO₂-haltigen und NOₓ-haltigen Gasen aus der thermischen Schwefelsäurespaltung, Umsetzung der SO₂-haltigen gase zu SO₃-haltigen Gasen an Vanadiumkontakten und Absorption der SO₃-haltigen Gase zur Erzeugung von Oleum und/oder Schwefelsäure.

Aus der Literatur sind unterschiedliche Verfahren zur Herstellung von Oleum und Schwefelsäure bekannt und ausführlich beschrieben. Bei den thermischen Prozessen (Schwefelverbrennung mit Luftsauerstoff, Metallsulfidröstung, Schwefelsäurespaltung, Sulfatprozesse) werden neben schwefeldioxidhaltigen Gasen auch Stickoxide NOₓ gebildet, die oberhalb 1 000°C direkt aus Stickstoff und Sauerstoff entstehen. Ein weiterer Anteil des NO wird durch die Produkte selbst eingebracht. Unter den Verbrennungs- Bedingungen handelt es sich ausnahmslos um NO. Das Stickstoffmonoxid wird wie auch die schwefeltrioxidhaltigen Gase, die am Vanadiumkontakt aus den SO₂-haltigen Gasen gebildet werden, absorbiert, so dass die gebildete Schwefelsäure oder das Oleum mit absorbiertem NO in Form der Nitrosylschwefelsäure verunreinigt. Man muss annehmen, dass NO auf die folgende Weise in Nitrosylschwefelsäure umgewandelt wird:

Gleichung 1: NO + SO₃ → NO₂ + SO₂

Gleichung 2: NO + NO₂ + H₂SO₄ → NOHSO₄ + H₂O

Nitrosylschwefelsäure, analytisch nachweisbar durch Hydrolyse mit Wasser zu HNO₂, ist ein starkes Korrosionsmittel für Stahl und Chrom-Nickel-Edelstähle und führt zu einem erheblichen Flächenabtrag an Apparaten und Rohrleitungen. Zur Reduzierung des Gehaltes an Nitrosylschwefelsäure wird daher nach einem bekannten Vorschlag 40 - %ige Dihydrazinsulfatlösung eingetragen.

In der DE-A-4 002 465 wird ein Verfahren beschrieben mit dem bis zu 95 Gew.-% der gesamten Stickoxide entfernt werden können. Gegenstand der DE-A-4 002 465 ist ein Verfahren zur kontinuierlichen Herstellung von Oleum einer Konzentration von 10 bis 45 Gew.-% SO₃ und/oder H₂SO₄ durch Verbrennung von Schwefel mit Luftsauerstoff nach dem Prinzip der über- und unterstöchiometrischen Verbrennung, Abkühlung der entstandenen schwefeldioxidhaltigen Gase auf 390°C bis 480°C, katalytische Umsetzung dieser Gase zu schwefeltrioxidhaltigen Gasen an einem vanadiumhaltigen Kontakt unter Anwendung des Prinzips der Einfach- oder Doppelkontaktkatalyse, Absorption der schwefeltrioxidhaltigen Gase nach Abkühlung, gegebenenfalls Abtrennung von Flüssigkeiten aus den Gasen nach der Absorption und Energiegewinnung, wobei die Verbrennung von Schwefel mit Luftsauerstoff unter Zusatz von trockenen SO₂-haltigen Gasen, die bis zu 5 000 ppm (NO)ₓ, bevorzugt unter 2 000 ppm (NO)ₓ, berechnet als NO, enthalten, geführt wird. Es werden als SO₂-haltige, trockene Gase, die bis zu 5 ppm (NO)ₓ, berechnet als NO, enthalten können, Spaltgase aus der thermischen Spaltung von Abfallschwefelsäuren eingesetzt, wobei diese Spaltgase 5 bis 10 Vol.-% O₂,5 bis 8 Vol.-% SO₂, <200 ppm CO. <1 000ppm (NO)ₓ <50 ppm Kohlenwasserstoffverbindungen und 82 bis 90 Vol.-% H₂O, N₂ und CO₂ enthalten können. Nach diesen Verfahren können die trockenen SO₂-haltigen Gase direkt in den Brennraum, in dem die Verbrennung von Schwefel mit Sauerstoff durchgeführt wird, oder nach Abmischung mit Verbrennungsluft in den Brennraum eingetragen werden. Wichtig ist, dass die SO₂-haltigen Gase (nitrosehaltige SO₂-haltige Gase) gemeinsam mit Schwefel verbrannt werden. In einer Temperaturvariante wird die Verbrennung von Schwefel bei Temperaturen zwischen 500°C und 1 000°C (gemessen am Ausgang des Brennraumes vor Abkühlung der Gase), zumeist zwischen 700°C und 950°C durchgeführt.

Das bekannte Verfahren hat den Nachteil, dass ein Abbau von bis zu 95 % erfolgt. Die Restmengen an (NO)ₓ führen aber, wie aus den Beispielen zu ersehen ist, zu Konzentrationen von >25 mg NO/Nm³. In der Praxis bedeutet dies, dass bei der Herstellung von Oleum hoher Konzentrationen von 30 bis 45 Gew.%, wie es für die Herstellung von reinem Schwefeltrioxid und Oleum 65% benötigt wird, praktisch das gesamte NO in Form von Nitrosylschwefelsäure absorbiert wurde und zu einer starken Anreicherung in den Oleumkreisläufen der Oleumdestillation führte. Erst unterhalb einer Konzentration von 27 % freiem SO₃ nimmt der Absorptionsgrad von NO merklich ab.

Es bestand daher die Aufgabe, beim bestehenden Verfahren den NOₓ-Gehalt erheblich unter 95 % auf Gehalte von <5 mg NO /Nm³ zu senken.

In überraschender Weise wird diese Aufgabe durch das erfindungsgemäße Verfahren gelöst. Die Vorteile des erfindungsgemäßen Verfahrens sind die Senkung des Nitrosylschwefelsäuregehaltes, die Senkung der Instandhaltungskosten, die durch Korrosion verursacht werden, und der völlige Verzicht auf den Einsatz von Dihydrazinsulfatlösung im Sinne der Aufgabenstellung nach § 37 des Gefahrstoffgesetzes, krebserzeugende Arbeitsstoffe zu ersetzen.

Gegenstand der Erfindung ist daher ein Verfahren zur kontinuierlichen Herstellung von Oleum einer Konzentration von 10 bis 45 Gew.-% SO₃ und / oder Schwefelsäure einer Konzentration von 94 bis 100 Gew.-% H₂SO₄ durch Verbrennung von Schwefel mit Luftsauerstoff nach dem Prinzip der überstöchiometrischen Verbrennung, Abkühlung der entstandenen schwefeldioxidhaltigen Gasen auf 350°C bis 500°C, katalytische Umsetzung dieser abgekühlten Gase zu schwefeltrioxidhaltigen Gasen an einem Vanadiumhaltigen Katalysator unter Anwendung der Einfach- oder Doppelkontaktkatalyse, Absorption der schwefeltrioxidhaltigen Gase nach Abkühlung, gegebenenfalls Abtrennung von Flüssigkeiten aus den Gasen nach der Absorption und Energierückgewinnung, wobei flüssiger Schwefel in den heißen Verbrennungsgasstrom senkrecht zur Hauptströmungsrichtung fächerförmig mittels einer oder mehrerer bimodaler Fächerdüsen eingedüst wird.

Bei der Lösung der erfindungsgemäßen Aufgabe erfolgt die Schwefelverbrennung in einer speziellen für die Verbrennung von flüssigen Schwefel geeigneten Brennkammer mit gekühlter Ofenwand. Die Kühlung der Brennkammer erfolgt dabei durch den Dampfkessel, d.h. durch die außen angebrachte Kesselwand, die aus aneinander geschweißten Einzelrohren besteht. Die Einbringung des Schwefels erfolgt ein- und/oder mehrstufig über mehrere spezielle peripher am Brennraum installierte Düsen mit einem Zerstäubungshilfsmittel, der Verbrennungsgasstrom tritt drallfrei oder drallarm in den Verbrennungsraum ein und durchströmt diesen in Form einer rückströmfreien und turbulenzarmen Pfropfenströmung in den Verbrennungsraum.

Das Verbrennungsgas aus Luftsauerstoff enthält üblicherweise trockene SO₂-/NOₓ₋haltige Gase aus der thermischen Schwefelsäurespaltung, die bis zu 5 000 ppm NOₓ, berechnet als NO enthalten können. Bevorzugt werden als SO₂-haltige Gase, trockene Spaltgase aus der thermischen Spaltung von Abfallschwefelsäuren eingesetzt, wobei diese Spaltgase bevorzugt 4 bis 10 Vol.-% O₂, 2 bis 9 Vol.-% SO₂, <200 ppm CO, <2 000 ppm NOₓ, <50 ppm Kohlenwasserstoffverbindungen und 82 bis 90 Vol.-% N₂ und CO₂ enthalten.

In einer weiteren Variante des Verfahrens werden als SO₂-haltige trockene Gase, die bis zu 5 000 ppm NOₓ enthalten können, Verbrennungsgase aus der Verbrennung von schwefelhaltigen Materialien eingesetzt.

Bevorzugt liegt das Verhältnis der SO₂-Menge aus den zugesetzten Gasen aus der thermischen Spaltung zu der SO₂-Menge aus der Schwefelverbrennung zwischen 1:5 und 3:1.

Für die erfindungsgemäße Durchführung des Verfahrens können die trockenen SO₂₋haltigen Gase direkt in die Brennkammer, in der die Verbrennung des flüssigen Schwefels mit Sauerstoff durchgeführt wird, eingetragen werden oder nach Abmischung mit der Verbrennungsluft in die Brennkammer eingetragen werden. Wichtig ist, dass die SO₂-haltigen Gase, die bis zu 5 000 ppm NOₓ enthalten können (nitrosehaltige SO₂-haltige Gase), gemeinsam mit dem Schwefel verbrannt werden. Der NO-Gehalt im Eintritt der Brennkammer kann danach zwischen 0 und 5 000 ppm liegen. Das Verbrennungsgas wird unter Nutzung von Reaktionswärme aus der Kontaktanlage vorgewärmt und tritt üblicherweise mit einer Temperatur von 250 bis 350°C in den Brennraum ein. Die Schwefelverbrennung des erfindungsgemäßen Verfahrens kann in an sich bekannter Weise einstufig oder in mehreren Stufen, bevorzugt in 2 Stufen durchgeführt werden.

Durch die spezielle Verdüsungstechnik in Kombination mit dem gekühlten Brennraum und einer zweistufigen Anordnung wird die Flammtemperatur in einem Bereich von 500°C bis 700°C in Abhängigkeit von der Verbrennungsleistung gehalten. Dabei wird das in der Verbrennungsluft enthaltene NO chemisch zerlegt und die Entstehung von neuem, sogenannten thermischen NO verhindert.

Durch eine dem Fachmann bekannte Gestaltung der Wärmeaustauscherflächen am Verdampfer und integrierten Überhitzer ist gewährleistet, dass die Gasaustrittstemperatur am Kopf des Apparates zwischen 350 und 500°C eingestellt werden kann.

Bei dem neuen Verfahren wird der flüssige Schwefel mit Hilfe von speziellen Zweistoffdüsen fächerförmig in den Verbrennungsgasstrom eingedüst. Bevorzugt werden dabei die Fächerdüsen pulsierend mit einer Frequenz von 5 s⁻¹ bis 70 s⁻¹ betrieben.

Der pulsierende Betrieb der Fächerdüsen wird im Wechseltakt zwischen der Verdünnung von flüssigem Schwefel und der Beaufschlagung mit trockener, auf 2 bis 10 bar komprimierter und auf 120°C bis 150°C temperierter Luft, Stickstoff oder eines entsprechenden Verbrennungsgasgemisches durchgeführt. Dieser pulsierende Betrieb wird üblicherweise als "bimodale Betriebsweise" bezeichnet.

Durch diese Autopulsation wechselt die Verdüsung ständig zwischen Druck- und 2-Stoff-Verdüsung.

Die Fächerdüsen werden zu Gruppen mit jeweils 3 bis 8, bevorzugt mit 4, ringförmig in der Brennkammer angeordnet. Zwischen den Verbrennungsstufen erfolgt jeweils eine Kühlung der SO₂-haltigen Gase über Verdampferflächen. Nach jeder Verbrennungsstufe wird das Gas bevorzugterweise auf 400 bis 600°C abgekühlt.

In einen senkrecht angeordneten Brennkammer tritt SO₂- und Luft-haltiges Gasgemisch von unten ein. Die Wandung der Brennkammer besteht aus der Rohrwand eines Naturumlaufverdampfers oder Zwangsumlaufverdampfers. Die Verbrennung erfolgt grundsätzlich überstöchiometrisch, d. h. mit ausreichendem Luftüberschuss, ein- bis mehrstufig, bevorzugt ein- oder zweistufig. Der Luftüberschuss liegt bevorzugt bei einem Molverhältnis von O₂ : SO₂ von 1,1 bis 0,9.

Entsprechend der Aufgabenstellung, keine Stickoxide bei der Verbrennung zu bilden und in der Verbrennungsluft vorhandenen Stickoxide zu reduzieren, muss die bimodal zerstäubende Fächerdüse angepasst werden. Dabei sind folgende Erkenntnisse für eine optimale Zerstäubung zu berücksichtigen:
- die thermische NOₓ-Bildung hängt von den in der Flamme vorhandenen Temperaturspitzen, deren Temperatur und Einwirkungszeit ab,
- die Reduktion von vorhandenem und gebildetem NOₓ hängt von der Oberfläche des reduzierend wirkenden Schwefels sowie deren flächengleichen Verteilung über dem Brennkammer-Querschnitt ab.

Für die Verdüsung des Schwefels ergibt sich:
- den Schwefel möglichst über den gesamten Querschnitt so zu verteilen, dass die lokale Wärmeentbindung pro Flächeneinheit und durchströmter Verbrennungsluft gleich groß ist,
- eine möglichst niedrige Verbrennungstemperatur zu erreichen,
- eine turbulente Mischung möglichst zu unterbinden.

Dies wird erreicht, wenn der Schwefel mit mehreren peripher am Umfang der Brennkammer verteilten Fächerdüsen senkrecht zur Strömung der turbulenzarmen, gleicher Geschwindigkeit zuströmenden Verbrennungsluft (Pfropfenströmung) zerstäubt wird. Wird die gesamte Menge des zu verdüsenden Schwefels gesplittet und bei zwischengeschalteter Wärmeabfuhr nacheinander eingebracht, ist es möglich, bei niedrigen Verbrennungstemperaturen den SO₂-Gehalt unabhängig von der Verbrennungstemperatur zu steigern.

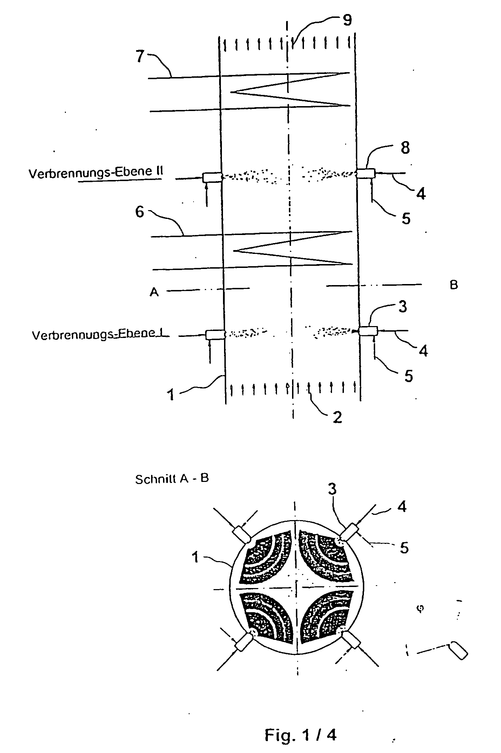

In Figur 1 ist eine mögliche Anordnung von Fächerdüsen in zwei Verbrennungsebenen eines stehenden Kessels 1 dargestellt. In die in einer Pfropfenströmung in den Kessel 1 strömende NOₓ-haltige Verbrennungsluft 2 wird in der Verbrennungsebene I mit mehreren Düsen 3 mit fächerartigem Sprühbild Schwefel 4 mit Hilfe von Zerstäubergas 5 verdüst. Der Schnitt A - B zeigt die Anordnung der Düsen am Umfang des Kessel in Ebene I. Nach der Verbrennung des Schwefels wird mittels eines ersten Wärmeaustauschers 6 dem strömenden Gas Wärme entzogen. Weiter stromab folgt in der Verbrennungsebene II die Verdüsung des restlichen Schwefels mittels Hybriddüsen 8, die sich in Anzahl, Leistung, Sprühwinkel und Zerstäubungsfeinheit von den Hybriddüsen 3 der Verbrennungsebene I unterscheiden können. Der nachfolgende Wärmeaustauscher steht für alle zur Dampferzeugung und Brennluft-Vorwärmung erforderlichen Apparate. Das SO₂-haltige und denoxierte Prozessgas 9 gelangt zum Doppelkontakt.

Soll die Verbrennungstemperatur an jeder Stelle des Flammenteppichs gleich hoch sein, muss die Wärmefreisetzung und damit die Schwefelkonzentration pro Flächeneinheit gleich groß sein. Dies bedeutet, dass in Nähe der Brennkammer-Innenwand wegen der mit dem Radius quadratisch ansteigenden Fläche eine ungleich größere Schwefelmenge gleich verteilt eingebracht werden muss, als im Zentrum des Flammenteppichs. Denkt man sich den gesamten Brennkammer-Querschnitt aus einer inneren Kreisfläche mit dem Durchmesser d und der zwischen inneren Kreisfläche und innerer Brennkammerwand liegenden Kreisringfläche mit den Durchmessern D und d zusammen gesetzt und nimmt man weiter an, dass d die Hälfte von D ist, so muss nur ein Viertel des Schwefels in die innere, von d umschlossene Fläche gelangen, hingegen Dreiviertel des Schwefels in die Kreisringfläche.

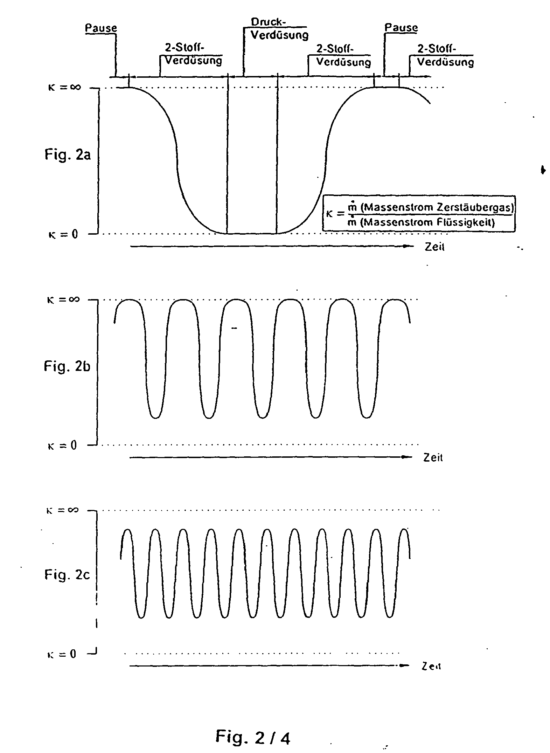

In Figur 2 ist eine Auswahl von zu realisierenden Betriebsabläufen einer Fächerdüse grafisch dargestellt. Figur 2a zeigt einen Betrieb mit zwei konstanten Betriebszuständen während einer Zerstäubungs-Periode. Die Verdüsung der Flüssigkeit während einer Periode erfolgt zwischen den Pausen, in denen nur Zerstäubergas die Hybriddüse verlässt. In diesem Betriebspunkt nimmt das Verhältnis der Massenströme von Zerstäubergas und Flüssigkeit κ den Wert Unendlich an (κ = ∞). Nach Ende der Pause beginnt die 2-Stoff-Verdüsung zunächst mit sehr viel Zerstäubergas und sehr wenig Flüssigkeit. Mit fortschreitender Zeit nimmt der Flüssigkeitsanteil zu und der Anteil des Zerstäubergases wird weniger bis zu κ = 0, dem Punkt, bei dem die Fächerdüse als reine Druckdüse arbeitet und diesen Zustand für kurze Zeit aufrecht erhält. Danach beginnt erneut die 2-Stoff-Verdüsung, gekennzeichnet durch ein gleitendes Massenstromverhältnis κ. Bei κ = ∞ wird der Betriebszustand "Pause" erreicht; damit ist eine Verdüsungsperiode abgeschlossen.

Durch die sich ändernden Betriebszustände findet eine Verdüsung mit sehr großem Tropfenspektrum - bis 1 : 1 000 - statt. Die feinsten Tropfen werden zu Beginn und am Ende der 2-Stoff-Verdüsung, die größten während der Druckdüsen-Periode erzeugt. Während den beiden Phasen der 2-Stoff-Verdüsung ändert sich die Größe des mittleren Tropfendurchmessers d50 ständig mit der Änderung von κ. Die größte Wurfweite wird mit großen Tropfen durch Druckdüsenbetrieb erreicht. Die Anzahl der dabei erzeugten Tropfen und damit der Anteil der weit in das querströmende Gas vordringenden Tropfen kann durch Variation von Druck und Pulsationsfrequenz beeinflusst werden.

In Figur 2 b ist ein möglicher Betriebszustand dargestellt, bei dem sich eine Verdüsungsperiode sich nur aus Pause und 2-Stoffverdüsung zusammensetzt. Damit wird erreicht, dass sowohl die mittlere Tropfengröße d50 als auch der max. Tropfendurchmesser abnimmt. Die Verdüsung wird feiner und die Wurfweite verringert sich.

Figur 2c zeigt einen nur aus 2- Stoff-Verdüsung bestehenden Verlauf. Während einer Periode wird weder der Betriebszustand Pause erreicht noch findet Druckverdüsung statt.

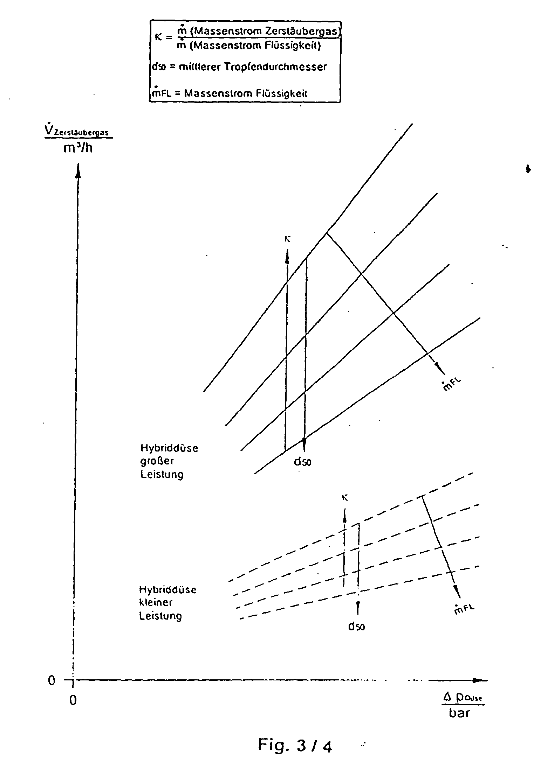

Figur 3 zeigt qualitativ Durchsatzdiagramme zweier Fächerdüsen unterschiedlicher Größe und Leistung. Mit dem Massenstrom der Flüssigkeit als Parameter ist für beide Düsen der Volumenstrom des Zerstäubergases über dem Druckverlust Δp der Fächerdüse aufgetragen. Die beiden schräg nach unten zeigenden Pfeile geben die Richtung des zunehmenden Massenstroms der Flüssigkeit an. Bei konstantem Druckverlust wächst mit steigendem Flüssigmassenstrom m der mittlere Tropfendurchmesser d50; das Massenstromverhältnis κ verhält sich umgekehrt, es nimmt ab.

Eine weitere die Sprühfeinheit beeinflussende Größe ist der Sprühwinkel ϕ. Da Messungen der Tropfengröße für Fächerdüsen in Abhängigkeit vom Sprühwinkel ϕ bisher nur lückenhaft bekannt sind, ist der Einfluss des Sprühwinkels ϕ bei Fächerdüsen, deren Spaltbreite sich mit dem Sprühwinkel ändert, nur abzuschätzen unter der Annahme, dass die von der Druckdüsenzerstäubung her bekannten Abhängigkeiten bei Düsen mit kreisrundem Düsenaustritt wie d50 ~ d_{Bohrung} und d50 ~ 1/Δp ^{0,33} auch für die Fächerdüse Gültigkeit haben. Bezogen auf einen mittleren Sprühwinkel von ϕ = 90° wäre eine Änderung des mittleren Tropfendurchmessers bis zu 1 % je 1° Sprühwinkel-Abweichung von einem mittleren Sprühwinkel ϕ =90 zu erwarten.

Der Einfluss des Massenstromverhältnisses κ auf die Zerstäubungsfeinheit bei der 2-Stoff-Verdüsung kann in erster Näherung mit der e-Funktion d50 ~ 1/e^{κ} beschrieben werden. Da die Fächerdüse üblicherweise im Bereich 0.05 ≤ κ 0,25 betrieben wird, führen kleine Änderungen von κ zu relativ großen Änderungen des mittleren Tropfendurchmessers d50.

Die Zerstäubungsfeinheit wird, wie zuvor erwähnt, von der Spaltbreite des im Schattenriss rechteckigen Austrittsschlitzes beeinflusst. Höhere Durchsätze erfordern größere Düsen und damit auch größere Austrittsschlitze mit entsprechend breiterem Spalt. Da, wie schon oben ausgeführt, die Spaltbreite wesentlich die Zerstäubungsfeinheit beeinflusst, erhöht sich d50 bei κ = konst. bei dem Einsatz von größeren Düsen.

Aufgrund der vielen möglichen Eingriffe zur Gestaltung der Verdüsungsfeinheit, des Tropfenspektrums und der Wurfweite, der Änderung der Zerstäubungsfeinheit während des Betriebes durch Variation des Druckabfalls Δp an der Düse und, bei Einsatz mehrerer am Umfang verteilter Lanzen, der Möglichkeit des Düsenwechsels während des Betriebes, erfüllt die Fächerdüsenverdüsung die Forderungen nach NOₓ- freier Schwefelverbrennung und zusätzlicher Denoxierung der in der Verbrennungsluft vorhandenen Stickoxide besser als der bekannte Stand der Technik.

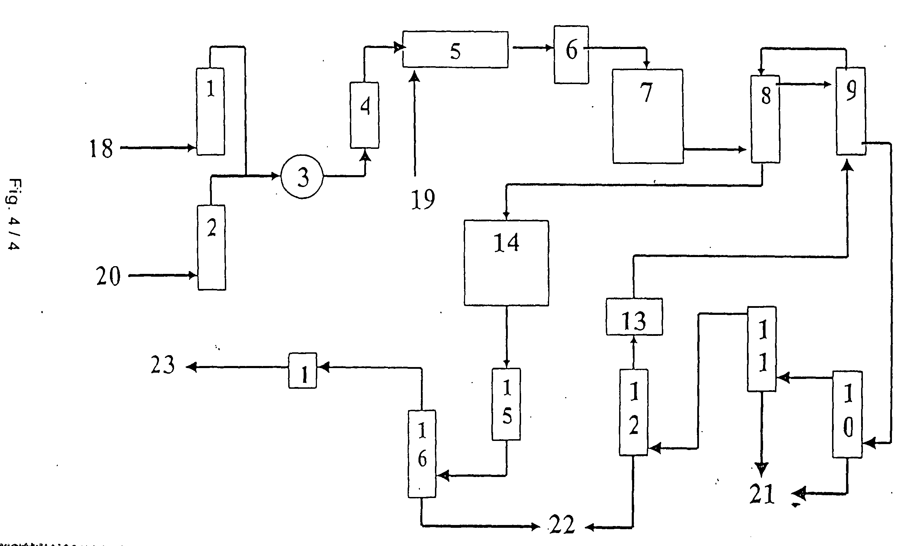

In Figur 4 ist eine mögliche Durchführungsform des erfindungsgemäßen Verfahrens aufgezeigt, ohne dass das erfindungsgemäße Verfahren darauf eingeschränkt werden soll:
- 1: Lufttrockner
- 2: Gastrockner
- 3: Gebläse
- 4: Wärmeaustauscher
- 5: Schwefelbrenner /Dampfkessel
- 6: Wärmeaustauscher
- 7: Vorkontakt
- 8: Wärmeaustauscher
- 9: Wärmeaustauscher
- 10: Oleumabsorber 1
- 11: Oleumabsorber 2
- 12: Zwischenabsorber
- 13: Filter
- 14: Nachkontakt
- 15: Wärmeaustauscher
- 16: Endabsorber
- 17: Filter
- 18: Luft
- 19: Schwefel
- 20: SO2-/NOₓ-haltiges Gas aus einer thermischen Schwefelsäurespaltung oder anderen Quellen
- 21: Oleum
- 22: Schwefelsäure
- 23: Kaminabgas

Das erfindungsgemäße Verfahren soll weiterhin an Hand der folgenden Beispiele näher erläutert werden, ohne dass hierin eine Einschränkung zu sehen ist.

### Figuren:

- Figur 1:: Düsen in Schritt A bis B
- Figur 2:: Schema von Betriebsabläufen
- Figur 3:: Durchsatzdiagramm
- Figur 4:: Verfahrensdiagramm

### Beispiele

### Beispiel 1

In einer technischen Anlage zur Erzeugung von Oleum der Konzentration 15 bis 38 Gew.-% freies SO₃ und Schwefelsäure der Konzentration 96,5 bis 99,5 Gew.% H₂SO₄ auf Basis der Verbrennung von Flüssig-Schwefel unter Anwendung der überstöchiometrischen Schwefelverbrennung und des 3 + 2 Doppelkontaktverfahrens werden 38 000 Nm³ Luft mit in einem Gastrockner bei 65°C getrocknet. In einer Brennkammer wird flüssiger Schwefel über 4 Zwei- Stoff-Düsen, die symmetrisch zusammen mit einer Zünddüse in dem Brennraum eingebaut sind, mit getrockneter Luft verdüst und zu SO₂-haltigen Gas mit einer Temperatur von 651°C verbrannt. Das Gas wird einem 3-Horden Vorkontakt zugeführt. Der Gehalt an NO liegt im Vergleichsversuch ohne zusätzliche Dosierung unter der Nachweisgrenze des Online Messgerätes von <2mg NO/Nm³. Das Gas wird in bekannter Weise wie in Figur 4 dargestellt zu Schwefelsäure 98,5 % und Oleum 35 % verarbeitet.

Die Düsen sind wie in Figur 1 im Schnitt A-B abgebildet angeordnet. Die Düsen hatten eine Leistung bezogen auf Wasser von 500 l/h (Querschnitt DN 50). Die äußere an der Verdüsung nicht beteiligte Schutzluft betrug 30 m³/h je Düse. In 4 Düsen wurden 3450 kg Schwefel / h bei einem Druck von 4,9 bar und 130°C zusammen mit insgesamt 1 000 m³/h 130-grädige Zerstäuberluft verdüst. Die Flammenlänge reicht bis auf die gegenüberliegende Seite, so dass die gesamte Fläche des Brennraumes bedeckt wird. Das Flammenbild der hellweißen Flamme ist gleichmäßig. Durch die Einbringung der Luft mittels radial angeordneten Luftkasten rolliert die Flamme, wodurch ein bestimmter Gasschlupf entsteht.

Vor dem Gebläse werden in die getrocknete Luft verschiedene Mengen an NO-Gas aus einer Gasbombe eingegeben. Die daraus resultierenden Messwerte am Dampfkesselausgang sind in der folgenden Tabelle 1 dargestellt:

| Kontinuierliche Zugabe NO-Gas in [l/h] | mg NO /Nm³ am Ofenausgang | Abbaurate in % bezogen auf die eingesetzte Menge |
|---|---|---|
| 0 | 1 | entfällt |
| 1 000 | 10 | 72 |
| 2 000 | 20 | 71 |
| 2500 | 26 | 71 |

In einer 2. Verbrennungsebene ähnlich der vorgenannten können bei einer ursprünglichen Konzentration von 100 mg NO /Nm³ dann 9 mg entsprechend einer Abbaurate von 91 % sicher erreicht werden.

### Beispiel 2

In einem Versuch wie oben wurde aber eine Pfropfenströmung erzeugt, indem Luft senkrecht zur Flammenebene eingeführt wurde. Die Schwefel-Düsen waren wie folgt angeordnet:

### Düsenanordnung im Ofen

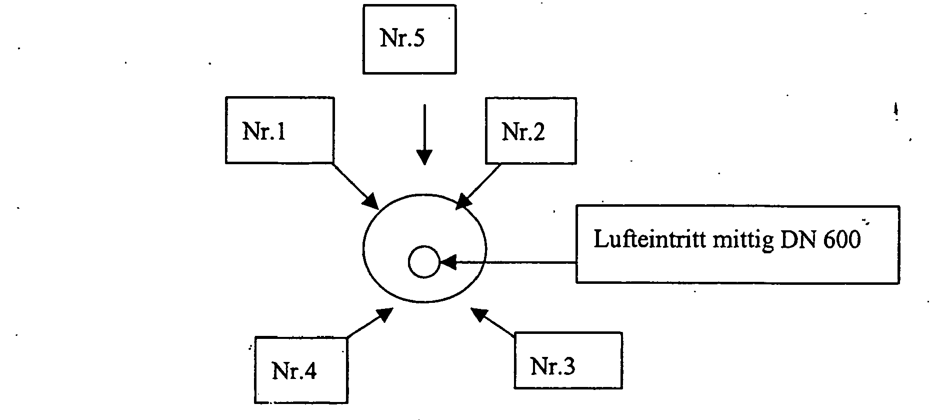

Düse 5 = Zünddüse (Selbstentzündung des Schwefels mittels heißer Luft von ca. 500°C).

### a) Verbrennung mit 2 Düsen und Zünddüse Nr.5

Mit den Schwefel-Düsen Nr.1 (580 kg/h), Nr.2 (830 kg/h) und Nr. 5 (590 kg/h) wurden zusammen 2 000 kg Schwefel/h verbrannt. Die Gesamtluftmenge von ca. 25 550 Nm³/h wurde auf 270°C vorgewärmt. Nach der Verbrennung resultierte ein SO₂-haltiges Gas von 440°C mit einem SO₂ Gehalt von 5,48 Vol-% SO₂. Der Schwefeldruck auf den Düsen betrug 5,6 bar. Die Druckluftmenge betrug insgesamt 430 m³/h.

| Kontinuierliche Zugabe NO-Gas in [l/h] | mg NO /Nm³ In der Verbrennungsluft (berechnet) | mg NO /Nm³ am Ofenausgang | Abbaurate in % bezogen auf die eingesetzte Menge |
|---|---|---|---|
| 0 | 0 | 0 | entfällt |
| 2.500 | 131 | 68 | 48 |
| 3.500 | 183 | 116 | 37 |
| 4.500 | 236 | 147 | 38 |

### b) Verbrennung mit 3 Düsen und Zünddüse Nr.5

Mit den Schwefel-Düsen Nr.1 (660 kg S/h ), Nr.2 (610 kg S/h), Nr.3 (900 kg S/h) und Nr.5 (410 kg S/h) wurden zusammen 2580 kg Schwefel/h verbrannt. Die Gesamtluftmenge von ca. 36.330 Nm³/h wurde auf 160°C vorgewärmt. Nach der Verbrennung resultierte ein SO₂-haltiges Gas von 913°C mit einem SO₂ Gehalt yon 5,01 Vol.-% SO₂. Der Schwefeldruck auf den Düsen betrug 5,6 bar. Die Druckluftmenge betrug insgesamt 430 m³/h.

| Kontinuierliche Zugabe NO-Gas in [l/h] | mg NO /Nm³ in der Verbrennungsluft (berechnet) | mg NO /Nm³ am Ofenausgang | Abbaurate in % bezogen auf die eingesetzte Menge |
|---|---|---|---|
| 0 | 0 | 0 | entfällt |
| 2.500 | 92 | 0 | 100 |
| 3.500 | 129 | 36 | 72 |
| 4.500 | 165 | 68 | 59 |

### c) Verbrennung mit 4 Düsen und Zünddüse Nr.5

Mit den Schwefel-Düsen Nr.1 (810 kg S /h), Nr.2 (780 kg S/h), Nr.3 (490 kg S /h), Nr. 4, (830 kg S /h), Nr. 5 (690 kg S /h) wurden zusammen 3.600 kg Schwefel/h verbrannt. Die Gesamtluftmenge von ca. 44.800 Nm³/h wurde auf 70°C vorgewärmt. Nach der Verbrennung resultierte ein SO₂-haltiges Gas von 835°C mit einem SO₂ Gehalt von 5,48 Vol.-% SO₂. Der Schwefeldruck auf den Düsen betrug 5,6 bar. Die Druckluftmenge betrug insgesamt 460 m³/h bei einem Druck von 5,5 bar.

| Kontinuierliche Zugabe NO-Gas in [l/h] | mg NO /Nm³ in der Verbrennungsluft (berechnet) | mg NO /Nm³ am Ofenausgang | Abbaurate in % bezogen auf die eingesetzte Menge |
|---|---|---|---|
| 0 | 0 | 0 | entfällt |
| 4000 | 120 | 0 | 100 |

## Patentansprüche

1. Verfahren zur kontinuierlichen Herstellung von Oleum einer Konzentration von 10 bis 45 Gew.-% SO₃ und / oder Schwefelsäure einer Konzentration von 94 bis 100 Gew.-% H₂SO₄ durch Verbrennung von Schwefel mit Luftsauerstoff in einer Brennkammer nach dem Prinzip der überstöchiometrischen Verbrennung, Abkühlung der entstandenen schwefeldioxidhaltigen Gasen auf 350°C bis 500°C, katalytische Umsetzung dieser abgekühlten Gase zu schwefeltrioxidhaltigen Gasen an einem Vanadiumhaltigen Katalysator unter Anwendung der Einfach- oder Doppelkontaktkatalyse, Absorption der schwefeltrioxidhaltigen Gase nach Abkühlung, gegebenenfalls Abtrennung von Flüssigkeiten aus den Gasen nach der Absorption und Energierückgewinnung, **dadurch gekennzeichnet, dass** flüssiger Schwefel in den heißen Verbrennungsgasstrom senkrecht zur Hauptströmungsrichtung fächerförmig mittels einer oder mehrerer bimodaler Fächerdüsen eingedüst wird.

2. Verfahren nach Anspruch 1, **dadurch gekennzeichnet, dass** dem Verbrennungsgasstrom aus Luftsauerstoff trockene SO₂-/NOₓ-haltige Gase aus der thermischen Schwefelsäurespaltung, die bis zu 5 000 ppm NOₓ, berechnet als NO, enthalten können, vor der Verbrennung zugemischt werden.

3. Verfahren nach Anspruch 2, **dadurch gekennzeichnet, daß** die trockenen SO₂ haltigen und NOₓ - haltigen Gase aus der thermischen Schwefelsäurespaltung 4 bis 10 Vol. % O₂, 2 bis 9 Vol.% SO₂, < 200 ppm CO, <2 000 ppm NOₓ, <50 ppm Kohlenwasserstoffverbindungen und 82 bis 90 Vol.% N₂ und CO₂ enthalten.

4. Verfahren nach einem der Ansprüche 1 bis 3, **dadurch gekennzeichnet, dass** die Brennkammer senkrecht angeordnet in einen Natur- oder Zwangsumlaufverdampfer integriert ist.

5. Verfahren nach einem der Ansprüche 1 bis 4, **dadurch gekennzeichnet, dass** der flüssige Schwefel über 3 bis 8 Fächerdüsen, ringförmig angeordnet in die Brennkammer eingebracht wird.

6. Verfahren nach einem der Ansprüche 1 bis 5, **dadurch gekennzeichnet, dass** die Fächerdüsen periodisch im Wechsel mit flüssigem Schwefel und mit trockener, auf 2 bis 10 bar komprimierter und auf 120°C bis 150°C temperierter Luft, Stickstoff oder ein Verbrennungsgasgemisch beaufschlagt werden.

7. Verfahren nach einem der Ansprüche 1 bis 6, **dadurch gekennzeichnet, dass** die Zerstäubung des Schwefels in einem Winkel von 70° bis 110° senkrecht zur Strömungsrichtung des Verbrennungsgasstroms erfolgt.

## Claims

1. Process for the continuous preparation of oleum of a concentration of 10 to 45% by weight of SO₃ and/or sulphuric acid of a concentration of 94 to 100% by weight of H₂SO₄ by combustion of sulphur with atmospheric oxygen in a combustion chamber according to the principle of superstoichiometric combustion, cooling the resultant sulphur-dioxide-containing gases to 350°C to 500°C, catalytic conversion of these cooled gases to give sulphur-trioxide-containing gases in the presence of a vanadium-containing catalyst using single or double contact catalysis, absorption of the sulphur-trioxide-containing gases after cooling, if appropriate removal of liquids from the gases after absorption and energy recovery, **characterized in that** liquid sulphur is injected into the hot combustion gas stream perpendicular to the main direction of flow in the form of a fan using one or more bimodal fan-type nozzles.

2. Process according to Claim 1, **characterized in that** dry SO₂-/NOₓ n-containing gases from the thermal cleavage of sulphuric acid which can contain up to 5 000 ppm of NOₓ, calculated as NO, are added before combustion to the combustion gas stream of atmospheric oxygen.

3. Process according to Claim 2, **characterized in that** the dry SO₂-containing and NOₓ n-containing gases from the thermal cleavage of sulphuric acid contain 4 to 10% by volume of O₂, 2 to 9% by volume of SO₂, <200 ppm of CO, <2 000 ppm of NOₓ, <50 ppm of hydrocarbon compounds and 82 to 90% by volume of N₂ and CO₂.

4. Process according to one of Claims 1 to 3, **characterized in that** the combustion chamber is vertically arranged integrated into a natural circulation or forced circulation evaporator.

5. Process according to one of Claims 1 to 4, **characterized in that** the liquid sulphur is introduced into the combustion chamber via 3 to 8 fan-type nozzles, arranged in a ring.

6. Process according to one of Claims 1 to 5, **characterized in that** the fan-type nozzles are periodically alternately impinged with liquid sulphur and with dry air compressed to 2 to 10 bar and heated to 120°C to 150°C, nitrogen or a combustion gas mixture.

7. Process according to one of Claims 1 to 6, **characterized in that** the sulphur is atomized at an angle of 70° to 110° perpendicularly to the direction of flow of the combustion gas stream.

## Revendications

1. Procédé en vue de la fabrication en continu d'oléum d'une concentration de 10 à 45 % en poids de SO₃ et/ou d'acide sulfurique d'une concentration de 94 à 100 % en poids de H₂SO₄, par combustion de soufre à l'aide d'oxygène de l'air dans une chambre de combustion, conformément au principe de la combustion sur-stoechiométrique, du refroidissement des gaz formés contenant du dioxyde de soufre à une température de 350°C à 500°C, de la conversion catalytique de ces gaz refroidis sur un catalyseur contenant du vanadium en gaz contenant du trioxyde de soufre, par utilisation d'une catalyse de contact simple ou de contact double, de l'absorption des gaz contenant du trioxyde de soufre après refroidissement, le cas échéant, de la séparation de liquides hors des gaz après l'absorption et la récupération de l'énergie, **caractérisé en ce que** le soufre liquide est injecté à l'aide d'une ou de plusieurs buses en éventail bi-modales dans le courant chaud de gaz de combustion, d'une façon perpendiculaire à la direction d'écoulement principale.

2. Procédé selon la revendication 1, **caractérisé en ce que** l'on ajoute au courant de gaz de combustion constitué d'oxygène de l'air, avant la combustion, des gaz provenant du clivage thermique de l'acide sulfurique, contenant des gaz secs contenant du SO₂/des NOₓ, qui peuvent contenir jusqu'à 5 000 ppm de NOₓ, calculés en tant que NO.

3. Procédé selon la revendication 2, **caractérisé en ce que** les gaz secs contenant du SO₂ et contenant des NOₓ provenant du clivage thermique de l'acide sulfurique, contiennent de 4 à 10 % en volume de O₂, de 2 à 9 % en volume % de SO₂, < 200 ppm de CO, <2 000 ppm de NOₓ, <50 ppm de composés d'hydrocarbures et 82 à 90 % en volume de N₂ et de CO₂.

4. Procédé selon l'une quelconque des revendications 1 à 3, **caractérisé en ce que** la chambre de combustion est intégrée dans un évaporateur à circulation naturelle ou à circulation forcée, dans une disposition perpendiculaire.

5. Procédé selon l'une quelconque des revendications 1 à 4, **caractérisé en ce que** le soufre liquide est introduit dans la chambre de combustion par l'intermédiaire de 3 à 8 buses en éventail, disposées sous la forme d'un anneau.

6. Procédé selon l'une quelconque des revendications 1 à 5, **caractérisé en ce que** les buses en éventail sont alimentées, d'une manière périodique, en alternance, à l'aide de soufre liquide et d'air, d'azote ou d'un mélange gazeux de combustion sec, tempéré à une température allant de 120°C à 150°C et comprimé à une pression allant de 2 à 10 bars.

7. Procédé selon l'une quelconque des revendications 1 à 6, **caractérisé en ce que** l'atomisation du soufre se fait dans un angle de 70 degrés à 110 degrés d'une manière perpendiculaire à la direction d'écoulement du courant de gaz de combustion.
